# DEMANDE DE BREVET EUROPEEN

(11) **EP 0 682 450 A1**
(43) Date de publication de la demande: **15.11.1995**
(21) Numéro de dépôt: 95401052.6
(22) Date de dépôt: 05.05.1995
(51) Int. Cl.: H04N 5/232

(54) **Dispositif d'assistance à la mise au point d'un objectif de caméra de télévision**

(30) Priorité: 10.05.1994 FR 9405731
(71) Demandeur: ANGENIEUX S.A., F-42570 Saint Heand (FR)
(72) Inventeur: Defay, Patrick, F-92402 Courbevoie Cedex (FR)
(74) Mandataire: Lincot, Georges

(57) **Abrégé**

Le dispositif comprend une mémoire (8) pour mémoriser la position initiale de la caméra avant la mise au point et une logique de commande (2) pour commander automatiquement le déplacement de l'optique zoom (6) en position téléobjectif et ramener l'optique zoom (6) sur la position initiale mémorisée dans la mémoire (8) lorsque la mise au point effectuée en position téléobjectif est terminée.

Les applications : caméras de télévision professionnelles.

## Description

La présente invention concerne un dispositif d'assistance à la mise au point d'un objectif de caméra de télévision.

Elle s'applique notamment à la réalisation de caméras multirésolution pour la télévision professionnelle.

Dans les caméras de télévision professionnelles la mise au point des objectifs est effectuée manuellement par des cadreurs qui ont pour missions principales de cadrer le champ à filmer et de régler la netteté de l'image. Le champ est cadré en agissant sur la fonction zoom de l'objectif et la netteté est obtenue par une fonction appelée mise au point.

Généralement deux catégories d'objectifs sont utilisés, ceux-ci étant dédiés soit à des caméras légères portables soit à des caméras lourdes de studio ou de reportage.

Les objectifs des caméras portables sont associés à des caméras légères transportables sur l'épaule du cadreur. Sur ces caméras, la fonction zoom est commandée par un commutateur encore appelé "rocker switch" dans le langage anglo-saxon, qui est actionné par la main droite d'un cadreur qui porte la caméra sur son épaule droite. Ce commutateur commande un servo mécanisme qui déplace les éléments optiques de l'objectif réalisant la fonction "zoom". Le cadreur agit avec sa main gauche pour tourner l'élément optique situé à l'avant de l'objectif pour réaliser la mise au point.

La qualité de la mise au point est laissée à l'appréciation du cadreur qui cherche à obtenir dans un viseur électronique situé sur la gauche de la caméra, l'image la plus nette possible.

Les objectifs montés sur les caméras de studio ou les grosses caméras de reportage sont articulés sur un pied mobile pour permettre au cadreur de déplacer la caméra et de l'orienter dans tous les directions de l'espace.

Les fonctions "zoom" et "mise au point" sont effectuées à l'aide de deux poignées fixées à l'arrière de la caméra ou sur le pied mobile. Chacune des poignées commande un servomécanisme qui effectue le déplacement des éléments optiques nécessaires à la mise au point et au cadrage du champ à filmer.

Ces poignées sont actionnées par le cadreur, l'une avec sa main droite, l'autre avec sa main gauche. L'image est observée dans un viseur électronique situé au-dessus et à l'arrière de la caméra.

Avec ces types de caméra, le cadrage et la mise au point restent des opérations délicates à effectuer pour le cadreur qui cherche à obtenir une mise au point précise dans un temps le plus réduit possible.

Actuellement, il n'existe pas, dans le domaine des caméras de télévision, de dispositifs d'assistance du cadreur pour le réglage de la mise au point.

Dans le domaine des caméras de télévision haute définition où il est impératif que le réglage de la netteté des images s'effectue de façon très précise, certaines fonctionnalités ont été adjointes aux caméras pour permettre au cadreur d'apprécier la justesse de la mise au point en faisant apparaître dans le viseur une information correspondante mais ces fonctionnalités n'apportent aucune simplification dans le travail du cadreur.

Les systèmes connus sous la désignation d'autofocus, qui permettent un réglage automatique de la mise au point des caméras grands publics ne sont pas encore adaptables au domaine de la télévision professionnelle, car les caractéristiques des objectifs de ces caméras et de leurs focales notamment, sont différentes de celles des objectifs utilisés en photographie ou en vidéo grand public, de sorte que les caméras professionnelles se prêtent moins bien au concept de mise au point automatique. D'autre part, les cadreurs ont des réticenses à utiliser des systèmes autofocus et ils préfèrent garder une maîtrise sur le réglage de la mise au point bien qu'ils restent ouverts pour accepter des fonctionnalités nouvelles qui leur permettraient de simplifier leur travail.

Sur les caméras professionnelles existantes, I'opération de cadrage et de mise au point est réalisée par action sur l'organe de commande de déplacement du zoom désigné souvent dans la technique sous les noms "rocker switch" ou "poignées zoom" pour amener l'objectif en position téléobjectif. La mise au point est alors effectuée par l'élément optique situé à l'avant de l'objectif. Le zoom est ensuite ramené dans sa position initiale par l'organe de commande du zoom. Mais le temps pour effectuer cette opération de cadrage est d'autant plus important que le cadreur doit manipuler deux fois la commande de déplacement du zoom. D'autre part, le cadreur n'est jamais certain de ramener le zoom précisément sur sa position initiale.

Le but de l'invention est de pallier les inconvénients précités.

A cet effet, l'invention a pour objet, un dispositif d'assistance à la mise au point d'un objectif de caméra de télévision du type comprenant une optique de zoom actionnée par un moteur commandé par un commutateur de zoom , caractérisé en ce qu'il comprend une mémoire pour mémoriser des positions de l'optique zoom, un organe de commande actionable manuellement par le cadreur de la caméra et couplé à une logique de commande pour simultanément mémoriser la position initiale de l'optique zoom et commander le déplacement automatique de l'optique zoom vers sa position téléobjectif à l'instant où le cadreur de la caméra agit sur l'organe de commande et pour ramener l'optique zoom sur la position initiale mémorisée dans la mémoire suite à une deuxième action du cadreur sur l'organe de commande, lorsque la mise au point effectuée par le cadreur en position téléobjectif est terminée.

Le dispositif selon l'invention a pour principal avantage qu'il simplifie le travail des cadreurs qui n'ont plus à actionner l'organe de commande du zoom pour effectuer les mises au point et qui peuvent ainsi se concentrer davantage sur le choix de leurs images. Il rend également minimum la durée des recalages de l'objectif, les déplacements de l'objectif en position téléobjectif et le retour à la position initiale étant effectuée à une vitesse de consigne maximale. Enfin, grâce à la mémoire de position de l'objectif, le cadreur est toujours assuré que le retour à la position initiale de l'objectif est toujours obtenu de façon précise.

D'autres caractéristiques et avantages de l'invention apparaîtront dans la description qui suit faite en regard des figures des dessins annexés qui représentent :
- la figure 1, un exemple de réalisation d'un dispositif selon l'invention ;
- la figure 2, un objectif portable incorporant le dispositif de la figure 1.

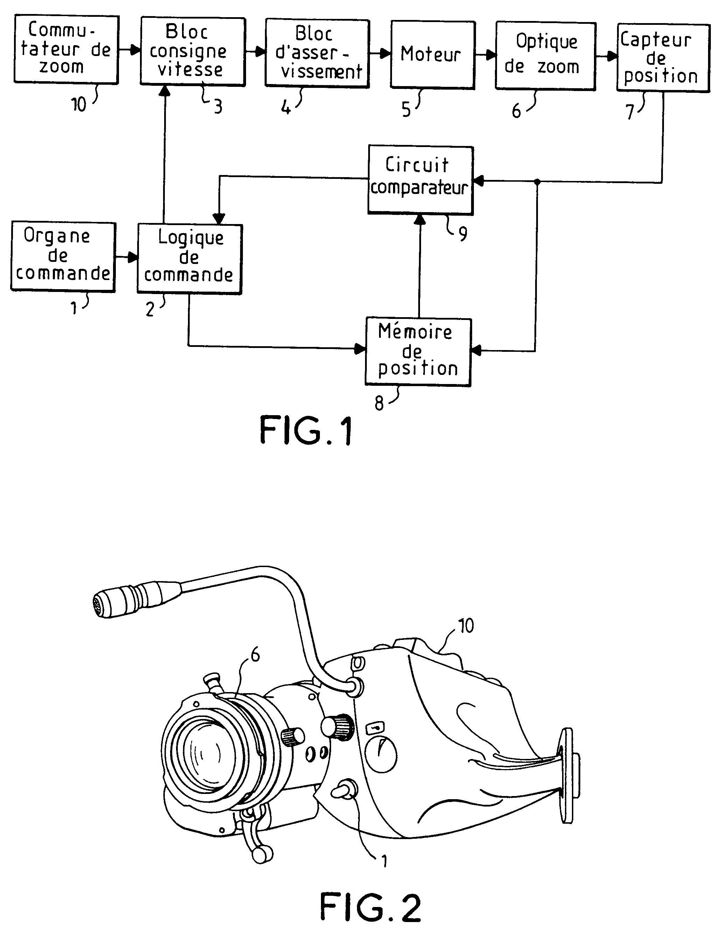

Le dispositif selon l'invention qui est représenté à la figure 1 comprend un organe de commande 1 à au moins deux états de fonctionnement, formé par un bouton poussoir ou tout dispositif équivalent, relié à une logique de commande 2. Il comprend également un bloc 3 générateur d'une consigne de vitesse, un bloc 4 d'asservissement, un moteur 5 d'entraînement d'une optique 6 assurant la fonction zoom, et un capteur 7 de la position de l'optique du zoom, l'ensemble des éléments 3 à 4 du dispositif étant couplés dans cet ordre de série. Le dispositif comprend également d'une part, une mémoire 8 de la position du zoom et un circuit comparateur 9 couplées tous les deux au capteur 7 et, d'autre part, un commutateur de zoom 10 ou "rocker switch" couplé au bloc 3 de consigne de vitesse. L'organe de commande 1, l'optique de zoom 6 et le commutateur de zoom 10 sont représentés sur la figure 2 avec les mêmes références.

Lorsque, pour effectuer une mise au point, le cadreur de la caméra actionne l'organe de commande 1 d'un premier vers un deuxième état de fonctionnement la logique de commande 2 commande l'écriture dans la mémoire 8 de l'information de position fournie par le capteur 7 qui représente la position initiale de l'optique 6 du zoom à l'instant d'actionnement de l'organe de commande 1. Simultanément la logique de commande 2 demande au bloc 3 générateur de consigne de vitesse d'appliquer sur l'asservissement 4 une consigne de vitesse pour actionner le moteur 5 et déplacer l'optique de zoom 6 jusqu'à la position téléobjectif pour laquelle le grandissement de l'image est maximum. Une fois la position téléobjectif atteinte, l'optique de zoom 6 est maintenue dans cette position par la logique de commande 2 tant que l'organe de commande 1 est maintenu sur son deuxième état de fonctionnement par le cadreur. Ce temps est mis à profit par le cadreur qui effectue le réglage de la mise au point de la caméra.

Lorsque la mise au point est terminée, le cadreur actionne à nouveau l'organe de commande 1 pour le ramener dans son premier état de fonctionnement. La logique de commande 2 commande alors le bloc générateur de consigne de vitesse 3 pour ramener l'optique de zoom 6 à la position initiale par application d'une vitesse de consigne appropriée à l'entrée du bloc d'asservissement 4. Lorsque le circuit comparateur 9 détecte une égalité entre l'information fournie par le capteur de position 7 et l'information de position initiale lue dans la mémoire de position 8, le circuit comparateur 9 transmet cette information à la logique de commande 2 qui arrête par l'intermédiaire du bloc de consigne de vitesse 3, l'optique du zoom sur sa position initiale.

Naturellement, le mode de réalisation de l'invention qui vient d'être décrit n'est pas unique et il va de soi que d'autres variantes de mise en oeuvre sont également envisageables. Notamment selon une deuxième variante, il est aussi possible d'appliquer le dispositif de l'invention à des caméras dont l'objectif est équipé d'un système de mise au point électrique. Dans ce cas, lorsque l'utilisateur de la caméra sollicite une séquence de mise au point par action sur l'organe de commande 1 entraînant l'objectif 6 à se positionner automatiquement sur la position téléobjectif, celui-ci peut alors faire une mise au point d'abord grossière en actionnant l'organe de commande de la mise au point de la caméra puis, en relâchant l'organe de commande, optimiser cette mise au point à l'aide de l'organe de mise au point électrique et d'une information fournie par la caméra qui donne une information sur le niveau de qualité de la mise au point. A la fin de ce processus, l'objectif est à nouveau ramené sur sa position initiale.

## Revendications

**1 -** Dispositif d'assistance à la mise au point d'un objectif de caméra de télévision du type comprenant une optique de zoom (6) actionnée par un moteur (5) commandé par un commutateur de zoom (10), caractérisé en ce qu'il comprend une mémoire (8) pour mémoriser des positions de l'optique zoom, un organe de commande (1) actionable manuellement par le cadreur de la caméra et couplé à une logique de commande (2) pour simultanément mémoriser la position initiale de l'optique zoom (6) et commander le déplacement automatique de l'optique zoom (6) vers sa position téléobjectif à l'instant où le cadreur de la caméra agit sur l'organe de commande et pour ramener l'optique zoom (6) sur la position initiale mémorisée dans la mémoire (8) suite à une deuxième action du cadreur sur l'organe de commande (1), lorsque la mise au point effectuée par le cadreur en position téléobjectif est terminée.

**2 -** Dispositif selon la revendication 1, caractérisé en ce que l'organe de commande (1) à au moins deux positions, et est fixé sur le corps de la caméra.

**3 -** Dispositif selon l'une quelconque des revendications 1 et 2, caractérisé en ce que la logique de commande (2) agit sur un bloc générateur de consigne de vitesse (3) pour commander en vitesse les déplacements de l'optique de zoom 6.

**4 -** Dispositif selon la revendication 3, caractérisé en ce qu'il comprend un capteur de position (7) entraîné par l'optique de zoom (6) pour fournir à tout instant une information donnant la position de l'optique de zoom (6).

**5 -** Dispositif selon la revendication 4, caractérisé en ce que la mémoire de position (8) est commandée en écriture par la logique de commande (2) pour mémoriser l'information de position fournie par le capteur de position (7).

**6 -** Dispositif selon la revendication 5, caractérisé en ce qu'il comprend un circuit comparateur (9) pour comparer l'information de position fournie par le capteur de position (7) à l'information de position mémorisée dans la mémoire (8) et pour commander l'arrêt du déplacement de l'optique de zoom (6) lorsque celle-ci est revenue sur sa position initiale.

**7 -** Dispositif selon la revendication 6, caractérisé en ce que l'arrêt du déplacement de l'optique de zoom (6) par le circuit comparateur (9) a lieu par l'intermédiaire de la logique de commande (2).
